# EUROPÄISCHE PATENTSCHRIFT

(11) **EP 0 350 751 B1**
(45) Veröffentlichungstag und Bekanntmachung des Hinweises auf die Patenterteilung: **09.10.1996**
(21) Anmeldenummer: 89112112.1
(22) Anmeldetag: 03.07.1989
(51) Int. Cl.: G01S 13/92

(54) **Verfahren und Vorrichtung zur Überwachung der Gewschwindigkeit von Fahrzeugen mittels einer Doppler-Radar-Geschwindigkeitsmesseinrichtung sowie Anwendung des Verfahrens**
Method and apparatus for monitoring the speed of vehicles using a Doppler radar speed measuring device, and application of the method
Procédé et appareil de surveillance de la vitesse de véhicules utilisant un radar Doppler de mesure de vitesse et application du procédé

(30) Priorität: 14.07.1988 CH 2718/88
(43) Veröffentlichungstag der Anmeldung: 17.01.1990
(73) Patentinhaber: MULTANOVA AG, CH-8612 Uster (CH)
(72) Erfinder: Hauser, Peter, CH-8610 Uster (CH)
(74) Vertreter: Ellenberger, Maurice

(56) Entgegenhaltungen:
- EP-A- 0 188 694
- FR-A- 2 279 113
- FR-A- 2 531 542
- US-A- 3 754 253
- US-A- 3 936 824

## Beschreibung

Die Erfindung betrifft ein Verfahren und eine Vorrichtung zur Ueberwachung der Geschwindigkeit von Fahrzeugen mittels einer Doppler-Radar-Geschwindigkeitsmesseinrichtung, welche die zu überwachende Fahrbahn mit einer Radarmesskeule überstreicht.

Derartige Verfahren sind aus der DE-PS 1 805 903 zur Ueberwachung des abfliessenden und aus der CH-PS 662 660 zur Ueberwachung des entgegenkommenden Verkehrs bekannt, wobei die Registrierung jeweils fotografisch, und zwar von hinten beziehungsweise von vorne erfolgt. Die praktische Erfahrung hat gezeigt, dass es immer wieder vorkommt, dass durch sogenannte Mehrfachreflexionen Falschmessungen ausgelöst werden.

Mehrfachreflexionen sind Messungen, bei denen der Radarstrahl das bewegte Objekt mehr als einmal trifft und damit eine entsprechend mehrfache Dopplerverschiebung der Radarfrequenz erfährt. Sie treten nur dann auf, wenn die Front oder das Heck eines Fahrzeugs vom Radarstrahl beaufschlagt sind. Wenn der Radarstrahl beispielsweise vom Heck eines abfliessenden Fahrzeugs gegen einen orstfesten Reflektor (beispielsweise Brükkenpfeiler) umgelenkt und von diesem via Fahrzeugheck zum Radargerät reflektiert wird, dann wird das Doppelte des Geschwindigkeitsmesswertes gemessen.

Es wäre naheliegend, die Mehrfachreflexionen dadurch auszuschalten, dass man ganzzahlige Mehrfache und Bruchteile des Geschwindigkeitsmesswertes nicht berücksichtigt. Hier würden aber Mehrfachreflexionen an bewegten Objekten, beispielsweise an der Front eines dem Messobjekt entgegenkommenden Lastwagens, nicht als solche erkannt, da sich in diesem Fall die Geschwindigkeiten der beiden beteiligten Fahrzeuge addieren würden, wodurch das ganzzahlige Verhältnis der Geschwindigkeitsmesswerte gestört wäre.

Eine zweite naheliegende Massnahme wäre der Versuch, Mehrfachreflexionen mittels der Länge der Verifikationsstrecke zu unterdrücken. Auch diese Lösung ist nicht praktikabel, da die Länge der Verifikationsstrecke einerseits durch den Geschwindigkeitsmesswert bestimmt ist und anderseits nicht beliebig gross gewählt werden kann. Das bedeutet mit anderen Worten, dass durch Mehrfachreflexion an einem bewegten Objekt ein so hoher Geschwindigkeitsmesswert vorgetäuscht werden kann, dass die Verifikationsstrecke abläuft bevor noch die Seitenpartie des angemessenen Fahrzeugs den Radarstrahl reflektiert.

Durch die Erfindung soll nun ein Verfahren angegeben werden, bei dessen Anwendung Mehrfachreflexionen mit an Sicherheit grenzender Wahrscheinlichkeit keine Falschmessung auslösen können.

Diese Aufgabe wird bei dem eingangs genannten Verfahren durch folgende Verfahrensschritte gelöst:
a. Bestimmung eines ersten Geschwindigkeitswertes (v*) aus ersten Dopplerfrequenzwerten nach Einfahrt eines Fahrzeuges in die Messkeule;
b. Festlegung der Länge einer Verifikationsstrecke (B) und Ueberwachung weiterer Dopplerfrequenzwerte auf signifikante Abweichungen gegenüber den ersten Dopplerfrequenzwerten solange das Fahrezug sich auf der Verifikationsstrecke befindet und Bestätigung des ersten Geschwindigkeitswertes sofern keine signifikante Abweichung zum ersten Geschwindigkeitswert festgestellt wird;
c. Registrierung des betreffenden Fahrzeuges bei Ueberschreiten eines bestimmten Grenzwertes durch den ersten Geschwindigkeitswert;
d. Suche nach weiteren Geschwindigkeitsmesswerten (vi) bei Ausfahrt des Fahrzeuges aus der Radarkeule;
e. Vergleich jedes allfällig ermittelten weiteren Geschwindigkeitsmesswertes (vi) mit dem ersten Geschwindigkeitswert (v*); und
f. Bestätigung oder Annullation des ersten Geschwindigkeitswertes und/oder der Registrierung in Abhängigkeit vom Ergebnis dieses Vergleichs, wobei schon eine Abweichung eines einzigen weiteren Geschwindigkeitsmesswertes zur Annullation des ersten Geschwindigkeitswertes führt.

Es wird also nach der Verifikation praktisch nochmals eine Geschwindigkeitsmessung gestartet und dabei gefundene Werte werden mit dem ersten Geschwindigkeitsmesswert verglichen. Dadurch wird sichgestellt, das ein durch Mehrfachreflexionen oder eventuell durch ein überholendes Fahrzeug verursachter unrichtiger erster Geschwindigkeitsmesswert als Falschmessung erkannt wird.

Die Erfindung betrifft weiter eine Vorrichtung zur Ueberwachung der Geschwindigkeit von Fahrzeugen mittels einer Doppler-Radar-Geschwindigkeitsmesseinrichtung, welche die zu überwachende Fahrbahn mit einer Radarmesskeule überstreicht, mit einem Rechner zur Verarbeitung und zur Auswertung der Dopplersignale und zur Ermittlung eines ersten Geschwindigkeitswertes aus ersten Dopplerfrequenzwerten nach Einfahrt eines Fahrzeuges in die Radarmesskeule, zur Festlegung der Länge einer Verifikationsstrecke und zur Ueberwachung weiterer Dopplerfrequenzwerte auf signifikante Abweichungen gegenüber den ersten Dopplerfrequenzwerten solange das Fahrzeug sich auf der Verifikationsstrecke befindet und zur Bestätigung des ersten Geschwindigkeitswertes sofern keine signifikante Abweichung zum ersten Geschwindigkeitswert festgestellt wird, und mit einer Registriereinrichtung zur Registrierung des betreffenden Fahrzeuges bei Ueberschreiten eines bestimmten Grenzwertes durch den ersten Geschwindigkeitswert.

Die erfindungsgemässe Vorrichtung ist dadurch gekennzeichnet, dass der Rechner weitere Geschwindigkeitswerte bei Ausfahrt des Fahrzeuges aus der Radarmesskeule erfasst und diese mit dem ersten Geschwindigkeitsmesswert vergleicht und den ersten Geschwindigkeitswert und/oder die Registrierung in Abhängigkeit vom Ergebnis dieses Vergleichs bestätigt oder annulliert wobei schon eine Abweichung eines einzigen weiteren Geschwindigkeitswertes vom ersten Geschwindigkeitswert zur Annullation des ersten Geschwindigkeitswertes führt.

Die Erfindung betrifft weiter eine Anwendung des genannten Verfahrens zur Geschwindigkeitsüberwachung aus einem bewegten Messfahrzeug.

Diese Anwendung ist gekennzeichnet durch folgende Schritte:
a. Messung der Eigengeschwindigkeit des Messfahrzeugs;
b: Bestimmung der Geschwindigkeitsmesswerte überholender Fahrzeuge anhand der Werte der Eigengeschwindigkeit des Messfahrzeugs und der Relativgeschwindigkeit des angemessenen Fahrzeugs;
c. anschliessende nochmalige Messung der Eigengeschwindigkeit des Messfahrzeugs; und
d. Bestätigung oder Annullation der Messung und/oder der Registrierung anhand des zusätzlichen Kriteriums, ob die vor und nach der Bestimmung der Geschwindigkeitsmesswerte des angemessenen Fahrzeugs gemessenen Werte der Eigengeschwindigkeit des Messfahrzeugs innerhalb eines vorgegebenen Toleranzbereichs übereinstimmen oder voneinander abweichen.

Nachstehend wird die Erfindung anhand eines Ausführungsbeispiels und der Zeichnungen näher erläutert; es zeigt:
- Fig. 1: ein Blockschaltbild einer erfindungsgemässen Vorrichtung,
- Fig. 2,3: je ein Diagramm zur Funktionserläuterung,
- Fig. 4-6: Flussdiagramme des Programms des Rechners der Vorrichtung von Fig. 1.

Das im folgenden beschriebene Verfahren und die zur dessen Durchführung verwendete Vorrichtung dienen zur Ueberwachung der Geschwindigkeit von Fahrzeugen und zur bildlichen, insbesondere fotografischen Registrierung derjenigen Fahrzeuge, deren Geschwindigkeit die jeweils zulässige Höchstgeschwindigkeit überschreitet. Dabei kann sowohl der zu- als auch der abfliessende Verkehr überwacht werden, was mit ein und derselben Vorrichtung und zwar auch im Gemischtbetrieb möglich ist. Zur näheren Erläuterung des technologischen Hintergunds sei auf die DE-PS 1 805 903 (=US-PS 3 754 253) und auf die CH-PS 662 660 (=US-PS 4 717 915) verwiesen, auf deren Offenbarung hiermit Bezug genommen wird.

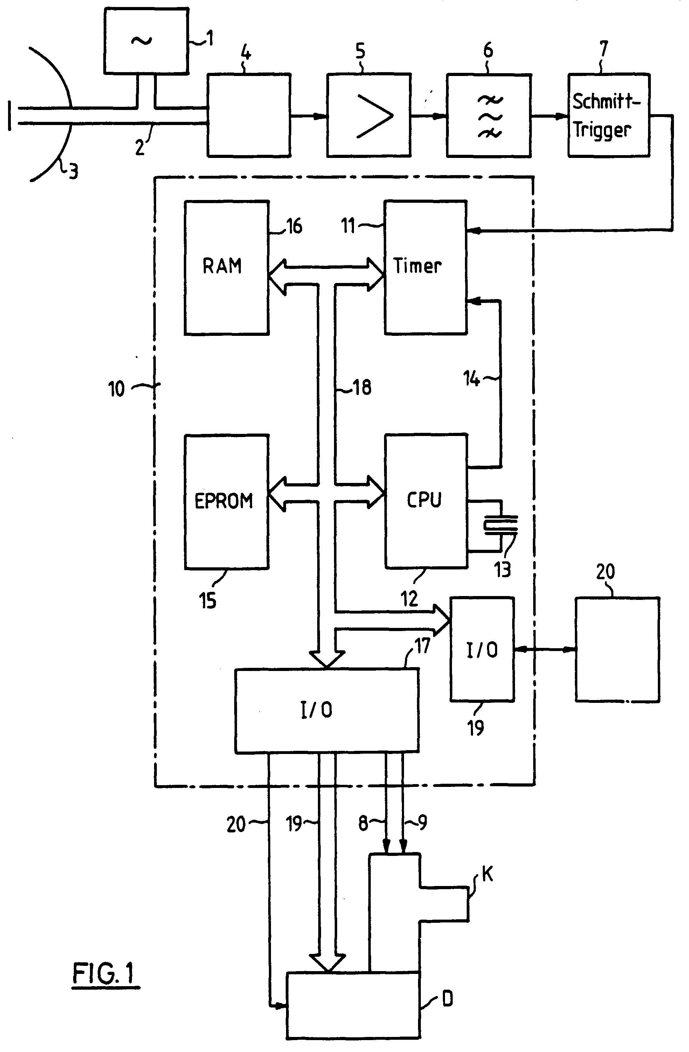

In Fig. 1 ist ein Blockschaltbild einer Vorrichtung zur Durchführung des erfindungsgemässen Verfahrens dargestellt. Ein Mikrowellenoszillator 1 erzeugt ein Mikrowellensignal, welches über einen Hohlleiter 2 einer Antenne 3 zugeführt und von dieser gebündelt abgestrahlt wird. Sobald ein Fahrzeug durch den Strahlungsbereich der Antenne 3 fährt, werden von diesem Strahlungsanteile zur Antenne 3 reflektiert. Diese reflektierten Strahlungsanteile sind gegenüber den ursprünglich von der Antenne 3 abgestrahlten um einen Betrag verschoben, welcher proportional zur Geschwindigkeit des Fahrzeugs ist. Diese Erscheinung bezeichnet man als Dopplereffekt und die Frequenzverschiebung als Dopplerfrequenz.

Die von der Antenne 3 empfangenen reflektierten Strahlungsanteile werden über den Hohlleiter 2 einem Mischer 4 zugeführt, zu welchem ausserdem auch ein kleiner Teil des vom Mikrowellenoszillators erzeugten ursprünglichen Mikrowellensignals gelangt. Die beiden erwähnten Signale werden im Mischer 4 gemischt und das sich daraus ergebende Mischprodukt, eine niederfrequente Wechselspannung mit der Dopplerfrequenz, wird an den Eingang eines Verstärkers 5 gelegt. Dessen Ausgangssignal wird dem Eingang eines Filters 6 zugeführt, welches nur für den für die weitere Auswertung interessierenden Teil des Spektrums, das ist die zum Geschwindigkeitsmessbereich des Radargeräts gehörende Dopplerspektralkomponente, durchlässig ist. Dadurch werden die Anteile der Rauschspannung ausserhalb des Durchlassbereichs des Filters 6 eliminiert, so dass das Signal-Rausch-Verhältnis verbessert wird. Das am Ausgang des Filters 6 erscheinende Signal wird anschliessend von einem Schmitt-Trigger 7 digitalisiert.

Das am Ausgang des Schmitt-Triggers 7 abnehmbare Digitalsignal enthält sämtliche nutzbare Informationen über die Geschwindigkeit der sich im Radarstrahl bewegenden Objekte. Es wird an den Eingang eines zu einem Mikrorechner 10 gehörenden Timers 11 (z.B. INTEL 8253) geführt, in welchem die Zeitintervalle zwischen den logischen Wechseln im digitalisierten Dopplersignal sequentiell gemessen und dem Mikrorechner 10 zur Auswertung angeboten werden. Der Mikrorechner enthält ausser dem Timer 11 noch eine Zentraleinheit (CPU) 12 (z.B. INTEL 8085) mit einem Quarz 13, welcher an den Timer 11 über eine Leitung 14 ein Taktsignal abgibt, einen löschbaren, programmierbaren Festwertspeicher (EPROM) 15 (z.B. INTEL 2764), einen Datenspeicher mit beliebigem Zugriff (RAM) 16 (z.B. INTEL 8185), eine erste Ein/Ausgabestufe (I/O) 17 (z.B. INTEL 8255) und eine zweite Ein/Ausgabestufe (I/0) 19, welche alle durch eine Sammelschiene 18 für die Uebergabe von Daten, Adressen und Steuersignalen verbunden sind.

Ueber die zweite Ein/Ausgabestufe 19 ist ein Bedienungsteil 20 mit Anzeige angeschlossen. Ueber die erste Ein/Ausgabestufe 17 wird eine Registrierkamera K mit einer Dateneinblende-Einrichtung D angesteuert. Die Kamera K ist über Leitungen 8 und 9 für das Kamera-Auslöse- bzw. das Filmtransportsignal und die Dateneinblende-Einrichtung D ist mittels einer Sammelschiene 19 für die einzublendenden Daten und einer Leitung 20 für das Daten-Einblende-Signal mit der Ein/Ausgabestufe 17 verbunden. Der Datenspeicher 16 dient zur vorübergehenden Speicherung von variablen Daten und von Zwischenresultaten und der programmierbare Festwertspeicher 15 enthält in binärem Code das Programm des Mikrorechners 10.

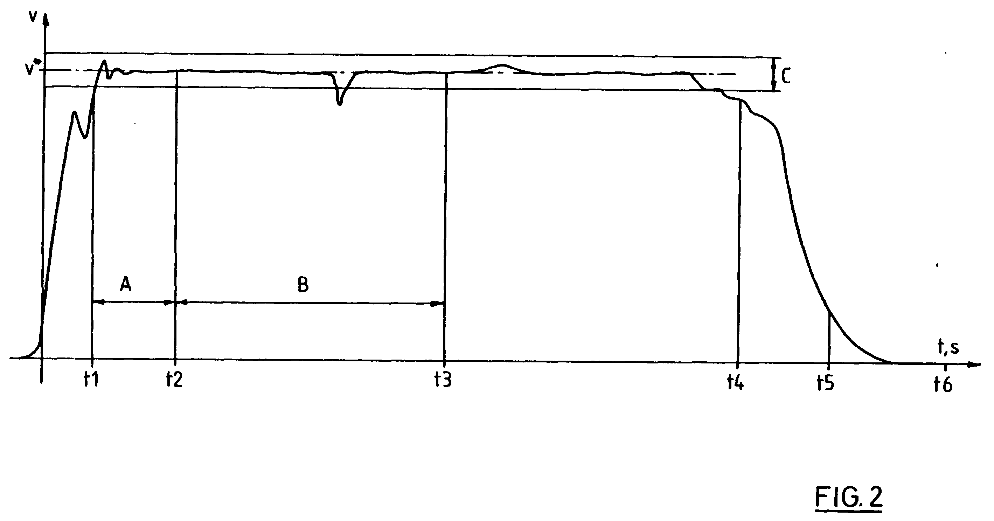

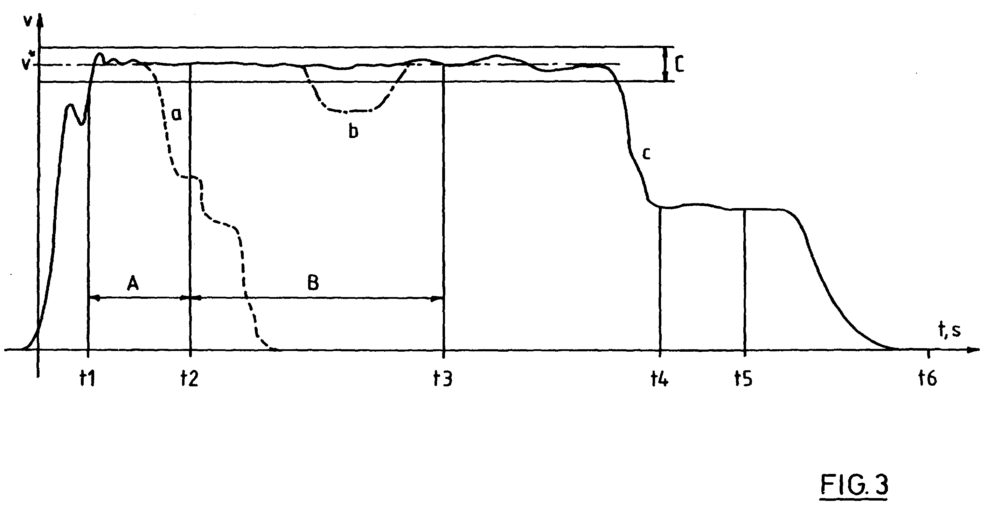

Die Funktionsweise der in Fig. 1 dargestellten Vorrichtung wird nun anhand der Fig. 2 und 3 beschrieben, wobei Fig. 2 ein Diagramm des Messablaufs einer gültigen Messung und Fig. 3 ein Diagramm des Messablaufs von drei annullierten Messungen zeigt. In den Diagrammen ist auf der Ordinate die Geschwindigkeit v und auf der Absizze die Zeit t beziehungsweise die entsprechende Wegstrecke s aufgetragen.

Sobald ein Fahrzeug in das nachfolgend als Messkeule bezeichnete, von der Antenne 3 (Fig. 1) abgestrahlte Strahlenbündel einfährt, reflektiert es die Radarstrahlung und es wird im Radargerät in bekannter Weise durch Ueberlagerung eines Teils der Sendeenergie mit der vom Fahrzeug reflektierten Empfangsenergie eine elektrische Schwingung, das Dopplersignal erzeugt. Dessen Frequenz, die Dopplerfrequenz, ist der Relativgeschwindigkeit zwischen Fahrzeug und Radargerät proportional. Diese Vorgänge sind in der schon erwähten DE-PS 1 805 903 ausführlich beschrieben.

In der Einfahrtsphase "wartet" das Radargerät auf das Fahrzeug bis sich die Dopplerfrequenz und damit die Geschwindigkeit einigermassen stabilisiert hat, was zum Zeitpunkt t1 der Fall ist, an dem die Detektion der Einfahrt erfolgt. Anschliessend wird im Zeitintervall t1 bis t2, welches der Länge einer Messstrecke A von maximal z.B. zwei Metern entspricht, ein Geschwindigkeitsmesswert v* ermittelt. Zu diesem Zweck wird innerhalb der Messstrecke A ein Stück mit konstanten Dopplerperioden gesucht. Jede neue Dopplerperiode wird mit dem laufenden Mittelwert der beispielsweise 4 letzten Dopplerperioden verglichen und nur akzeptiert, wenn sie von diesem um nicht mehr als eine vorbestimmte Toleranz von beispielsweise 3% abweicht. Dann wird zum Zeitpunkt t2 über eine bestimmte Anzahl von beispielsweise 12 aufeinanderfolgenden und das genannte Konstanzkriterium erfüllenden Dopplerperioden der Mittelwert gebildet und daraus der Geschwindigkeitsmesswert v* berechnet.

Gleichzeitig laufen zum Zeitpunkt t2 noch folgende Vorgänge ab:
- Anzeige des Geschwindigkeitsmesswertes v* am Bedienungsteil 20;
- Festlegung eines auf den Geschwindigkeitsmesswert v* bezogenen Toleranzbereichs C von beispielsweise v* plus/minus 3% und Berechnung von Zeitwerten, die gewissen vom Fahrzeug zurückgelegten Wegstrecken entsprechen;
- Festlegung der Länge der sogenannten Verifikationsstrecke B von beispielsweise drei Metern Länge, innerhalb welcher die Dopplerfrequenz keine signifikanten Abweichungen vom gespeicherten Geschwindigkeitsmesswert v* aufweisen darf;
- Festlegung einer Grenzlänge von beispielsweise einem Meter als Kriterium, ob eine signifikante Abweichung vorliegt. Definition: Signifikante Abweichung ist ein ununterbrochenes Verlassen des Toleranzbereichs C durch die Dopplerfrequenz über eine die Grenzlänge überschreitenden Strecke.

Bei Ueberwachung des abfliessenden Verkehrs läuft zum Zeitpunkt t2 kein weiterer Vorgang ab, bei Ueberwachung des Gegenverkehrs erfolgen zwei zusätzliche Operationen:
- Vergleich des Geschwindigkeitsmesswerts v* mit einem gespeicherten Grenzwert für die am Messort zulässige Höchstgeschwindigkeit.
- Im Fall der Ueberschreitung dieses Grenzwerts durch v*, Auslösung einer Fotografie des betreffenden Fahrzeugs (aber noch keine Dateneinblendung und kein Weitertransport des Films).

Nun erfolgt über die Länge der Verifikationsstrecke B bis zum Zeitpunkt t3 die Verifikation des Geschwindigkeitsmesswerts v*. In Fig. 2 ist in diesem Intervall zwar eine Signalabweichung eingetragen, bei welcher die Dopplerfrequenz den Toleranzbereich C verlässt; es liegt aber keine signifikante Abweichung vor, da die Länge der Abweichung weit unter der Grenzlänge liegt. Somit erfolgt zum Zeitpunkt t3 die Feststellung, dass der Geschwindigkeitsmesswert v* die Verifikation bestanden hat. Die Verifikation des Geschwindigkeitsmesswertes v* erfolgt in jedem Fall, also auch dann, wenn v* kleiner ist als der Grenzwert für die am Messort zulässige Höchstgeschwindigkeit.

Bei Messung des abfliessenden Verkehrs wird nun, falls v* grösser ist als der genannte Grenzwert, eine Fotografie ausgelöst.

Nach dem Zeitpunkt t3 erfolgt eine nachfolgend als "Check" bezeichnete weitere Messwertüberprüfung, durch welche hauptsächlich durch Mehrfachreflexionen des Radarstrahls (siehe Beschreibungseinleitung) ausgelöste Falschmessungen erkannt werden sollen. Bei der Ueberprüfung Check wird geprüft, ob bis zur Ausfahrt des Fahrzeugs aus der Radarkeule weitere Geschwindigkeitsmesswerte auftreten, und ob diese gegebenenfalls von v* abweichen. Wird ein solcher abweichender Messwert gefunden, dann wird die Messung und eine eventuell ausgelöste Fotografie annulliert. Wird kein abweichender Messwert gefunden und damit der Geschwindigkeitsmesswert v* bestätigt, wird in eine allfällig ausgelöste Fotografie der Geschwindigkeitsmesswert v* eingeblendet und der Filmtransport freigegeben.

Bei der Ueberprüfung Check wird nach dem Zeitpunkt t3 nach einem mit der Messwertfindung (Messstrecke A) vergleichbaren Verfahren, aber mit reduzierten Konstanzkriterien (z.B. Toleranz der Dopplerperioden zum laufenden Mittelwert 6% statt 3%, Anzahl Einträge in die Summe der Dopplerperioden 8 statt 12) nach einem weiteren Geschwindigkeitsmesswert gesucht. Die Konstanzkriterien werden reduziert, um abweichende Geschwindigkeitswerte, auch wenn sie nur kurz auftreten, sicher zu erkennen. Wenn kein weiterer Geschwindigkeitsmesswert mehr ermittelt werden kann, so enstpricht dies der Ausfahrt aus der Radarkeule und die Messung ist gültig. Wird ein weiterer Geschwindigkeitsmesswert gefunden, erfolgt ein Vergleich mit dem Geschwindigkeitsmesswert v*; sind beide Messwerte innerhalb der Toleranzgrenze gleich, dann wird ein nächster Check gestartet bis entweder ein abweichender Messwert oder keiner mehr gefunden wird. Bei Auftreten eines abweichenden Messwertes wird die Messung annulliert.

In Fig. 2 wird im Zeitpunkt t4 eine Abweichung festgestellt, die anschliessend bis zum Zeitpunkt t5 überprüft wird. Da es sich hier um die Ausfahrt des Fahrzeugs aus der Radarkeule handelt, nimmt das Dopplersignal stetig ab und es kann sich kein Messwert mehr bilden. Daher wird zum Zeitpunkt t5 der Geschwindigkeitsmesswert v* in die Fotografie eingeblendet und der Film weitertransportiert. Zum Zeitpunkt 6t schliesslich hat das Fahrzeug die Radarkeule verlassen, was durch eine Lücke im Dopplersignal angezeigt wird.

In Fig. 3 sind drei Fälle dargestellt, wo es zu einer Annullation der Messung kommt.
- Fall a:: Während der Messstrecke wird kein Messwert gefunden, so dass zum Zeitpunkt t2 auch kein Geschwindigkeitsmesswert v* berechnet werden kann. Die Messung wird abgebrochen.
- Fall b:: während der Verifikation (Strecke B) tritt eine Abweichung von mehr als 3% über eine Strecke von mehr als einem Meter auf. Daher wird die Verifikation nicht bestanden und die Messung wird annulliert. Es wird zum Zeitpunkt t3 bei abfliessendem Verkehr gar kein Foto ausgelöst und bei Gegenverkehr wird in die bereits zum Zeitpunkt t2 ausgelöste Fotografie ein Annullationszeichen eingeblendet.
- Fall c:: Die Verifikation wurde bestanden, das heisst, dass in jedem Fall eine Fotografie ausgelöst worden ist. Bei der Ueberprüfung Check wird eine Abweichung festgestellt. Deren Ueberprüfung zwischen t4 und t5 ergibt einen weiteren Geschwindigkeitsmesswert ungleich v*, so dass zum Zeitpunkt t5 eine Annullation der Messung mittels Einblendung eines entsprechenden Annullationszeichens in die Fotografie erfolgt.

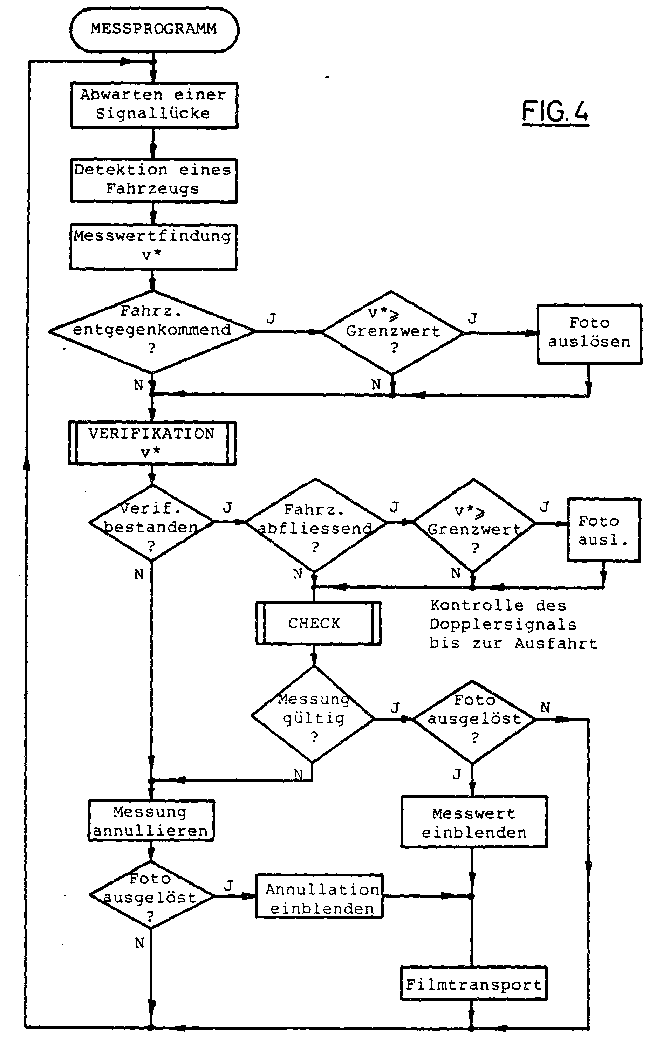

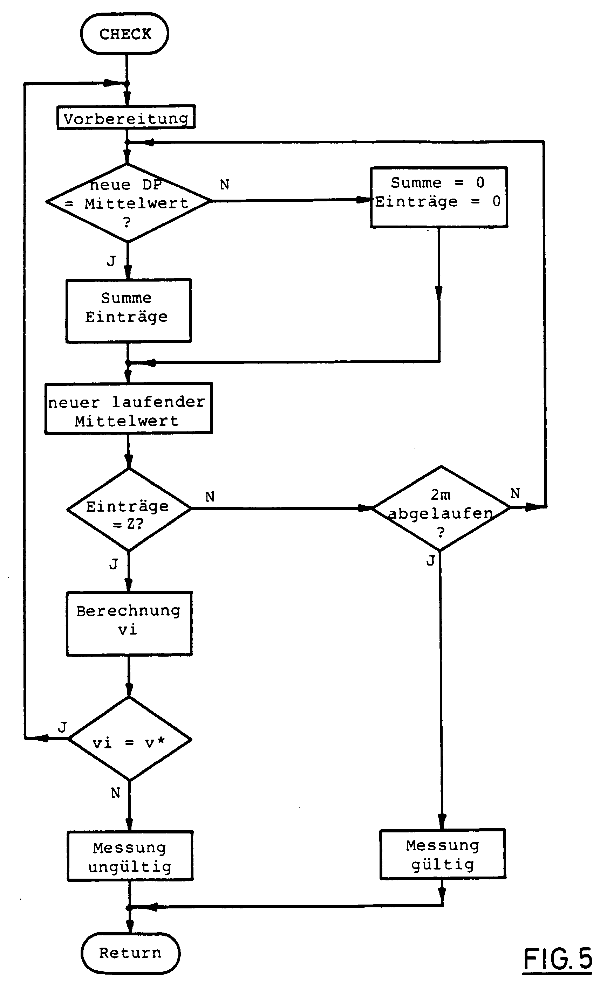

Fig. 4 zeigt ein Flussdiagramm des Messprogramms, welches prinzipiell mit demjenigen nach der CH-PS 662 660 übereinstimmt und deswegen nicht näher erläutert wird. Unterschiede bestehen unter anderem darin, dass zu Beginn der Messung eine Dopplersignallücke abgewartet wird (um sicherzustellen, dass nicht ein sich bereits in der Radarkeule befindliches Fahrzeug erneut angemessen, und dass jedes Fahrzeug kurz nach Einfahrt in den Radarstrahl gemessen wird), und dass eine Unterscheidung nach abfliessendem und entgegenkommendem Verkehr erfolgt. Der Hauptunterschied liegt in der Subroutine Check, deren Flussdiagramm in Fig. 5 gezeigt ist. Die Subroutine Verifikation entspricht derjenigen der CH-PS 662 660 und ist hier nicht dargestellt.

Gemäss Fig. 5 beginnt die Subroutine Check mit der Vorbereitung der Messung, wobei die Zähler für die Fahrtstrecke, die Summe der Dopplerperiode und die Anzahl der Einträge auf Null gestellt werden. Ausserdem erfolgt die Vorgabe, dass ein Mittelwert über vier Dopplerperiode zu bilden ist.

Anschliessend beginnt die Suche nach neuen Dopplerperioden; falls solche gefunden werden, werden sie mit dem Mittelwert verglichen. Stimmen sie mit diesem innerhalb einer vorgegebenen Toleranz überein, dann werden die neuen Dopplerperioden zur vorhandenen Summe addiert und es wird die Anzahl der Einträge inkrementiert. Passen die neuen Dopplerperioden nicht zum Mittelwert, dann werden Summe und Anzahl der Einträge gleich Null gestellt und es wird anschliessend für beide Fälle ein neuer laufender Mittelwert gebildet.

Anschliessend wird geprüft, ob die geforderte Anzahl Z der Einträge erreicht wird. Falls nein, wird überprüft, ob eine bestimmte Fahrtstrecke von beispielsweise zwei Metern abgelaufen ist. Wenn ja, liegt eine Ausfahrt vor und die Messung ist gültig; wenn nein, beginnt wiederum der Ablauf unmittelbar nach der Vorbereitung des Messung.

Ist die Anzahl Z der geforderten Einträge erreicht, dann wird ein neuer Geschwindigkeitsmesswert vi berechnet und mit dem ursprünglich zum Zeitpunkt t2 (Fig. 2) ermittelten Geschwindigkeitsmesswert v* verglichen. Stimmen beide innerhalb des Toleranzbereichs überein, dann startet der Ablauf wieder bei der Vorbereitung der Messung. Weichen die beiden Geschwindigkeitsmesswerte voneinander ab, dann wird die Messung als ungültig taxiert. Mit dem Befund "Messung ungültig" oder "Messung gültig" findet ein Rücksprung ins Messprogramm statt.

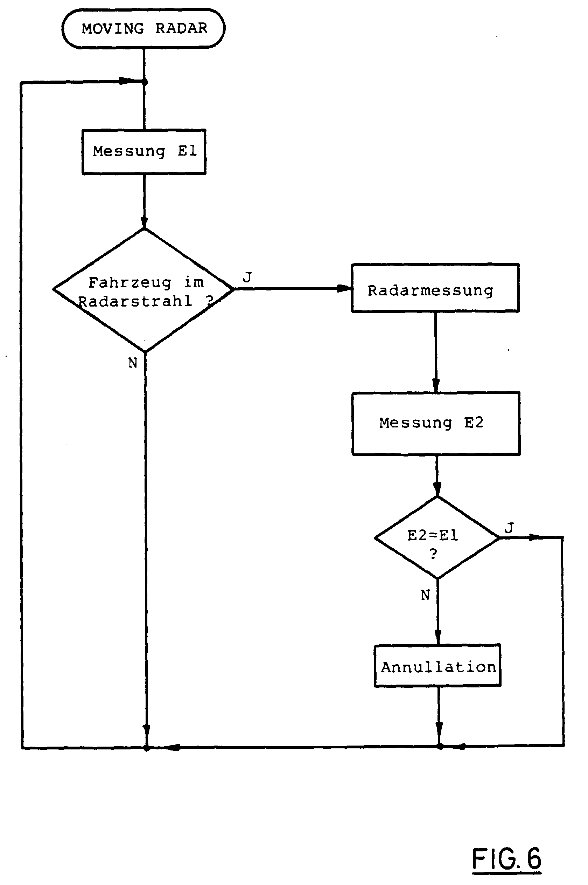

Bei dem bisher beschriebenen Ausführungsbeispiel ist stillschweigend vorausgesetzt, dass das Radargerät während der Messung steht und sich nicht bewegt. Soll die Ueberwachung mittels Radarmessung aus einem fahrenden Fahrzeug vorgenommen werden (sogenanntes Moving Radar), dann erfolgt ein Ablauf gemäss dem in Fig. 6 dargestellten Flussdiagramm. Das bei der Messung verwendete Fahrzeug muss mit einem geeichten Tachometer zur Messung der Eigengeschwindigkeit ausgerüstet sein.

Im sogenannten Tachobetrieb wird ständig die Eigengeschwindigkeit E1 gemessen und angezeigt und es wird laufend überprüft, ob sich ein Fahrzeug im Radarstrahl befindet. Ist dies der Fall, dann erfolgt eine Radarmessung gemäss dem Messprogramm von Fig. 4, jedoch mit dem Unterschied, das für die Beurteilung der Gültigkeit der Messung ein zusätzliches Kriterium herangezogen wird, durch welches eine vom Messprogramm von Fig. 4 her an sich gültige Messung noch annulliert werden kann.

Und zwar wird nach der Radarmessung erneut die Eigengeschwindigkeit des Messfahrzeugs gemessen. Stimmt der dabei gemessene Wert E2 innerhalb einer Toleranz mit E1 überein, dann besteht kein Einwand gegen die soeben vorgenommene Radarmessung und es beginnt wiederum der Tachobetrieb. Weicht jedoch E2 von E1 ab, dann wird die Radarmessung annulliert.

## Patentansprüche

1. Verfahren zur Überwachung der Geschwindigkeit von Fahrzeugen mittels einer Doppler-Radar-Geschwindigkeitsmesseinrichtung, welche die zu überwachende Fahrbahn mit einer Radarmesskeule überstreicht, mit folgenden Verfahrensschritten:
a. Bestimmung eines ersten Geschwindigkeitswertes (v*) aus ersten Dopplerfrequenzwerten nach Einfahrt eines Fahrzeuges in die Messkeule;
b. Festlegung der Länge einer Verifikationsstrecke (B) und Überwachung weiterer Dopplerfrequenzwerte auf signifikante Abweichungen gegenüber den ersten Dopplerfrequenzwerten solange das Fahrzeug sich auf der Verifikationsstrecke befindet und Bestätigung des ersten Geschwindigkeitswertes sofern keine signifikannte Abweichung zum ersten Geschwindigkeitswert festgestellt wird;
c. Registrierung des betreffenden Fahrzeuges bei Überschreiten eines bestimmten Grenzwertes durch den ersten Geschwindigkeitswert;
gekennzeichnet durch folgende weitere Verfahrensschritte:
d. Suche nach weiteren Geschwindigkeitswerten (vi) bei Ausfahrt des Fahrzeuges aus der Radarmesskeule;
e. Vergleich jedes allfällig ermittelten weiteren Geschwindigkeitswertes (vi) mit dem ersten Geschwindigkeitswert (v*); und
f. Bestätigung oder Annullation des ersten Geschwindigkeitswertes und/oder der Registrierung in Abhängigkeit vom Ergebnis dieses Vergleichs, wobei schon eine Abweichung eines einzigen weiteren Geschwindigkeitswertes vom ersten Geschwindigkeitswert zur Annullation des ersten Geschwindigkeitswertes führt.

2. Verfahren nach Anspruch 1, dadurch gekennzeichnet, dass vor Beginn einer Messung das Auftreten einer Lücke des Dopplersignals von einer bestimmten minimalen Länge abgewartet wird.

3. Verfahren nach Anspruch 1 oder 2, dadurch gekennzeichnet, dass anhand des Dopplersignals die Fahrtrichtung des angemessenen Fahrzeugs festgestellt, und dass bei entgegenkommenden Fahrzeugen die Registrierung vor und bei abfliessenden nach der Verifikation erfolgt.

4. Verfahren nach Anspruch 3, dadurch gekennzeichnet, dass bei Bestätigung der Messung der Messwert und bei Annullation ein Annullationszeichen in die Registrierung eingeblendet wird, und dass das Registriermedium, welches vorzugsweise ein fotografischer Film ist, anschliessend weitertransportiert und damit Bereitschaft für die nächste Messung erstellt wird.

5. Verfahren nach Anspruch 4, dadurch gekennzeichnet, dass bei der Suche nach weiteren Geschwindigkeitsmesswerten (vi) gegenüber der Bestimmung des ersten Geschwindigkeitsmesswertes (v*) weniger strenge Kriterien angewendet werden.

6. Verfahren nach Anspruch 5, dadurch gekennzeichnet, dass das Nichtauffinden eines weiteren Geschwindigkeitsmesswertes (vi) als Ausfahrt des angemessenen Fahrzeugs aus der Radarkeule bewertet wird.

7. Vorrichtung zur Überwachung der Geschwindigkeit von Fahrzeugen mittels einer Doppler-Radar-Geschwindigkeitsmesseinrichtung, welche die zu überwachende Fahrbahn mit einer Radarmesskeule überstreicht, mit einem Rechner (10) zur Verarbeitung und zur Auswertung der Dopplersignale und zur Ermittlung eines ersten Geschwindigkeitswertes (v*) aus ersten Dopplerfrequenzwerten nach Einfahrt eines Fahrzeuges in die Radarmesskeule, zur Festlegung der Länge einer Verifikationsstrecke (B) und zur Überwachung weiterer Dopplerfrequenzwerte auf signifikante Abweichungen gegenüber den ersten Dopplerfrequenzwerten solange das Fahrzeug sich auf der Verifikationsstrekke befindet und zur Bestätigung des ersten Geschwindigkeitswertes sofem keine signifikante Abweichung zum ersten Geschwindigkeitswert festgestellt wird, und einer Registriereinrichtung zur Registrierung des betreffenden Fahrzeuges bei Überschreiten eines bestimmten Grenzwertes durch den ersten Geschwindigkeitswert, dadurch gekennzeichnet, dass der Rechner (10) weitere Geschwindigkeitswerte (vi) bei Ausfahrt des Fahrzeuges aus der Radarmesskeule erfasst und diese mit dem ersten Geschwindigkeitsmesswert vergleicht und den ersten Geschwindigkeitswert und/oder die Registrierung in Abhängigkeit vom Ergebnis dieses Vergleiches bestätigt oder annulliert wobei schon eine Abweichung eines einzigen weiteren Geschwindigkeitswertes vom ersten Geschwindigkeitswert zur Annullation des ersten Geschwindigkeitswertes führt."

8. Anwendung des Verfahrens nach Anspruch 1 zur Geschwindigkeitsüberwachung aus einem bewegten Messfahrzeug, gekennzeichnet durch folgende Schritte:
a. Messung der Eigengeschwindigkeit (El) des Messfahrzeugs;
b. Bestimmung der Geschwindigkeitsmesswerte (v*, vi) überholender Fahrzeuge anhand der Werte der Eigengeschwindigkeit des Messfahrzeugs und der Relativgeschwindigkeit des angemessenen Fahrzeugs;
c. anschliessende nochmalige Messung der Eigengeschwindigkeit (E2) des Messfahrzeugs; und
d. Bestätigung oder Annullation der Messung und/oder der Registrierung anhand des zusätzlichen Kriteriums, ob die vor und nach der Bestimmung der Geschwindigkeitsmesswerte des angemessenen Fahrzeugs gemessenen Werte der Eigengeschwindigkeit des Messfahrzeugs innerhalb eines vorgegebenen Toleranzbereichs übereinstimmen oder voneinander abweichen.

9. Anwendung nach Anspruch 8, dadurch gekennzeichnet, dass die Vergleiche der Eigengeschwindigkeit vor und nach der Messung (E1 bzw. E2) unmittelbar vor der Einblendung des Messwertes oder des Annullationszeichens in die Registrierung erfolgt.

## Claims

1. A process for monitoring the speed of vehicles by means of a Doppler radar speed measuring device which sweeps the roadway to be monitored with a radar measuring lobe, comprising the following process steps:
a. Determination of a first speed value (v*) from first Doppler frequency values following the entrance of a vehicle into the measuring lobe;
b. Definition of the length of a verification section (B) and monitoring of further Doppler frequency values for significant deviations from the first Doppler frequency values for such time as the vehicle is in the verification section and confirmation of the first speed value if no significant deviation from the first speed value is ascertained;
c. Recording of the respective vehicle in the event of the overshooting of a specified limit value by the first speed value;
characterised by the following further process steps:
d. Search for further speed values (vi) on the exit of the vehicle out of the radar measuring lobe;
e. Comparison of any possibly detected further speed value (vi) with the first speed value (v*); and
f. Confirmation or cancellation of the first speed value and/or of the recording as a function of the result of this comparison, where even a deviation in one single further speed value relative to the first speed value leads to the cancellation of the first speed value.

2. A process as claimed in Claim 1, characterised in that before the start of a measurement the occurrence of a gap in the Doppler signal of a specified minimum length is awaited.

3. A process as claimed in Claim 1 or 2, characterised in that the direction of travel of the measured vehicle is determined on the basis of the Doppler signal, and that in the case of approaching vehicles the recording takes place before the verification and in the case of outflowing vehicles the recording takes place after the verification.

4. A process as claimed in Claim 3, characterised in that in the event of the confirmation of the measurement the measurement value is faded into the recording and in the event of the cancellation of the measurement a cancellation signal is faded into the recording, and that the recording medium, which is preferably a photographic film, is then transported onward and preparation is thus made for the next measurement.

5. A process as claimed in Claim 4, characterised in that in the search for further speed measurement values (vi) less strict criteria are applied than in the determination of the first speed measurement value (v*).

6. A process as claimed in Claim 5, characterised in that the absence of the discovery of a further speed measurement value (vi) is evaluated as an exit of the measured vehicle out of the radar lobe.

7. A device for monitoring the speed of vehicles by means of a Doppler radar speed measuring device which sweeps the roadway to be monitored by means of a radar measuring lobe, with a computer (10) for processing and analyzing the Doppler signals and for determining a first speed value (v*) from first Doppler frequency values following the entrance of a vehicle into the radar measuring lobe, for defining the length of a verification section (B) and for monitoring further Doppler frequency values for significant deviations from the first Doppler frequency values for such time as the vehicle is in the verification section and for confirming the first speed value if no significant deviation from the first speed value is ascertained, and with a recording device for recording the respective vehicle in the event of the overshooting of a specific limit value by the first speed value, characterised in that the computer (10) detects further speed values (vi) on the exit of the vehicle out of the radar measuring lobe and compares these with the first speed measurement value and confirms or cancels the first speed value and/or the recording as a function of the result of this comparison, where even a deviation in one single further speed value relative to the first speed value leads to the cancellation of the first speed value.

8. An application of the process claimed in Claim 1 for speed monitoring from a moving measuring vehicle,
characterised by the following steps:
a. Measurement of the measuring vehicle's own speed (E1) ;
b. Determination of the speed measurement values (v*, vi) of overtaking vehicles on the basis of the values of the measuring vehicle's own speed and the relative speed of the measured vehicle;
c. Subsequent further measurement of the measuring vehicle's own speed (E2); and
d. Confirmation or cancellation of the measurement and/or of the recording on the basis of the additional criterion as to whether the values of the measuring vehicle's own speed measured before and after the determination of the speed measurement values of the measured vehicle correspond or differ compared to one another within a predetermined tolerance range.

9. An application as claimed in Claim 8, characterised in that the comparisons of the vehicle's own speed before and after the measurement (E1 and E2 resp.) take place directly before the fading in of the measurement value or of the cancellation signal into the recording.

## Revendications

1. Procédé de surveillance de la vitese de véhicules au moyen d'un dispositif de mesure de vitesse par radar Doppler, lequel balaie la voie à surveiller avec un lobe de rayonnement de mesure du radar, avec les opérations de procédé suivantes :
a. détermination d'une première valeur de vitesse (v*) à partir de premières valeurs de fréquence Doppler après entrée d'un véhicule dans le lobe de rayonnement de mesure ;
b. fixation de la longueur d'un parcours de vérification (B) et surveillance d'autres valeurs de fréquence Doppler pour détecter des écarts significatifs par rapport aux premières valeurs de fréquence Doppler tant que le véhicule se trouve sur le parcours de vérification et confirmation de la première valeur de vitesse pour autant qu'aucun écart significatif par rapport à la première valeur de vitesse, n'a été constaté ;
c. enregistrement du véhicule concerné lors du dépassement d'une valeur limite déterminée par la première valeur de vitesse;
caractérisé par les autres opérations de procédé suivantes :
d. recherche d'autres valeurs de vitesse (vi) lors de la sortie du véhicule du lobe de rayonnement de mesure du radar ;
e. comparaison de chaque autre valeur de vitesse (vi) détectée dans tous les cas avec la première valeur de vitesse (v*) et
f. confirmation ou annulation de la première valeur de vitesse et/ou de l'enregistrement en fonction du résultat de cette comparaison, déjà un écart d'une seule autre valeur de vitesse par rapport à la première valeur de vitesse conduisant à l'annulation de la première valeur de vitesse.

2. Procédé selon la revendication 1, caractérisé en ce qu'avant le début d'une mesure, on attend l'apparition d'une lacune d'une longueur minimale déterminée dans le signal Doppler.

3. Procédé selon la revendication 1 ou 2, caractérisé en ce qu'à l'aide du signal Doppler, la direction de mouvement du véhicule soumis à la mesure est constatée et en ce que , dans le cas de véhicules venant en sens inverse, l'enregistrement s'effectue avant et lors du passage après la vérification.

4. Procédé selon la revendication 3, caractérisé en ce, lors de la confirmation de la mesure des valeurs de mesure et lors de l'annulation, un signe d'annulation est superposé à l'enregistrement et en ce que le milieu d'enregistrement, qui est de préférence un film photographique, est ensuite transporté plus loin et qu'ainsi la disponibilité pour la mesure suivante est réalisée.

5. Procédé selon la revendication 4, caractérisé en ce que, lors de la recherche d'autres valeurs de mesure de vitesse (vi), des critères moins stricts sont utilisés relativement à la détermination de la première valeur de mesure de vitesse (v*).

6. Procédé selon la revendication 5, caractérisé en ce que la non-détection d'une autre valeur de mesure de vitesse (vi) est interprétée comme sortie du véhicule soumis à la mesure hors du lobe de rayonnement du radar.

7. Dispositif de surveillance de la vitesse de véhicules au moyen d'un dispositif de mesure de vitesse à radar Doppler, lequel balaie la voie à surveiller avec un lobe de rayonnement de mesure du radar, avec un ordinateur (10) pour le traitement et l'exploitation des signaux Doppler et pour la détection d'une première valeur de vitesse (v*) à partir de premières valeurs de fréquence Doppler après entrée d'un véhicule dans le lobe de rayonnement de mesure du radar pour la fixation de la longueur d'un parcours de vérification (B) et pour la surveillance d'autres valeurs de fréquence Doppler pour détecter des écarts significatifs vis-à-vis des premières valeurs de fréquence Doppler tant que le véhicule se trouve sur le parcours de vérification et pour la confirmation de la première valeur de vitesse pour autant qu'aucun écart significatif par rapport à la première valeur de vitesse n'est constaté et avec un dispositif d'enregistrement pour l'enregistrement du véhicule concerné lors du dépassement d'une valeur limite déterminée par la première valeur de vitesse, caractérisé en ce que l'ordinateur (10) saisit d'autres valeurs de vitesse (vi) lors de la sortie du véhicule hors du lobe de rayonnement de mesure du radar et compare celles-ci à la première valeur de mesure de vitesse et confirme ou annule la première valeur de vitesse et/ou l'enregistrement en fonction du résultat de cette comparaison, déjà un écart d'une seule autre valeur de vitesse à partir de la première valeur de vitesse conduisant à l'annulation de la première valeur de vitesse.

8. Application du procédé selon la revendication 1 à la surveillance de vitesse à partir d'un véhicule de mesure en mouvement, caractérisée par les opérations suivantes :
a. mesure de la vitesse propre (E1) du véhicule de mesure ;
b. détermination des valeurs de mesure de vitesse (V*, vi) de véhicules dépassants à l'aide des valeurs de la vitesse propre du véhicule de mesure et de la vitesse relative du véhicule soumis à la mesure ;
c. mesure répétée subséquente de la vitesse propre (E2) du véhicule de mesure ; et
d. confirmation ou annulation de la mesure et/ou de l'enregistrement à l'aide du critère supplémentaire consistant à savoir si les valeurs de la vitesse propre du véhicule de mesure, mesurées avant et après la détermination des valeurs de mesure de vitesse du véhicule soumis à la mesuer, concordent ou diffèrent les unes les autres dans un domaine de tolérance donné à l'avance.

9. Application selon la revendication 8, caractérisée en ce que les comparaisons de la vitesse propre avant et après la mesure (E1 et/ou E2) s'effectuent immédiatement avant la superposition de la valeur de mesure ou du signe d'annulation à l'enregistrement.
